# EUROPÄISCHE PATENTANMELDUNG

(11) **EP 2 647 577 A1**
(43) Veröffentlichungstag der Anmeldung: **09.10.2013**
(21) Anmeldenummer: 13001740.3
(22) Anmeldetag: 05.04.2013
(51) Int. Cl.: B65B 35/24, B65B 35/38, B65B 43/52, B65B 5/08, B65G 47/91

(54) **Handhabeverfahren und -vorrichtung für Verpackungseinheiten**

(30) Priorität: 05.04.2012 DE 102012205688
(71) Anmelder: Kaufland Fleischwaren SB GmbH & Co. KG, 74172 Neckarsulm (DE)
(72) Erfinder: Groß, Thorsten, 37308 Heilbad Heilingenstadt (DE); Mader, Christopher, 74842 Waldmühlbach (DE); Zimmermann, Peter, 74906 Bonfeld Bad Rappenau (DE)
(74) Vertreter: Schmid, Nils T.F.

(57) **Zusammenfassung**

Die Erfindung betrifft ein Handhabeverfahren und eine Handhabevorrichtung (1) für Verpackungseinheiten (2). Bei dem Handhabeverfahren werden Verpackungseinheiten (2) entlang einer Zuführrichtung (15) zu einer Umsetzvorrichtung (310) mittels einer ersten Fördervorrichtung (11) gefördert, Transporteinheiten (20; 21) parallel zu den Verpackungseinheiten (2) entlang der Zuführrichtung (15) zu der Umsetzungsvorrichtung (310) mittels einer zweiten Fördervorrichtung gefördert, eine, zwei oder mehrere Verpackungseinheiten (2) nach einem ersten Setzmuster (25) zu einer ersten Gruppe (26) von Verpackungseinheiten (2) auf einer Anordnungsfläche (27) angeordnet, die erste Gruppe (26) von Verpackungseinheiten (2) mittels eines ersten Greifabschnitts (30) eines Greifers (17) der Umsetzvorrichtung (310) gegriffen und angehoben, die erste Gruppe (26) von Verpackungseinheiten (2) entlang einer Versetzrichtung (37) von einer ersten Position (38) über der ersten Fördervorrichtung (11) zu einer zweiten Position (45) über der zweiten Fördervorrichtung versetzt und die erste Gruppe (26) von Verpackungseinheiten (2) in eine Transporteinheit (20; 21) abgesetzt, wobei das Anheben, Versetzen und Absetzen entlang einer Bewegungsbahn erfolgt, die in einer zu der Zuführrichtung (15) orthogonalen Ebene liegt.

## Beschreibung

Die Erfindung betrifft ein Handhabeverfahren und ferner eine Handhabevorrichtung für Verpackungseinheiten.

Handhabeverfahren und -vorrichtungen der eingangs genannten Art dienen insbesondere in der Automatisierungstechnik zum Bewältigen eines Materialflusses, beispielsweise eines stetigen Flusses von Verpackungseinheiten von oder zu einer Wirkstelle. Ein Beispiel einer Handhabevorrichtung ist eine so genannte Pick-And-Place-Vorrichtung, mittels derer beispielsweise Verpackungseinheiten, die sich auf einer Anordnungsfläche befinden, gegriffen werden und an einen anderen Ort, beispielsweise eine Abstellfläche, bewegt und abgesetzt werden. Eine Verpackungseinheit kann beispielsweise als ein Kistenelement, eine Schale, eine Schachtel, etc. ausgebildet und vorzugsweise mit

Lebensmitteln als verpackten Gütern gefüllt sein.

Bisher bekannte Handhabeverfahren und -vorrichtungen, insbesondere Pick-And-Place-Vorrichtungen, sind ausgebildet, einzelne Verpackungseinheiten gezielt zu greifen, zu versetzen und an einer anderen Stelle abzusetzen. Handhabevorrichtungen dieser Art müssen zur Bewältigung eines hohen Durchsatzes von zu versetzenden Verpackungseinheiten große Beschleunigungen auf die Verpackungseinheiten ausüben und die Verpackungseinheiten mit hohen Geschwindigkeiten (z.B. 200 km/h) bewegen. Dabei besteht die Gefahr, dass in den Verpackungseinheiten befindliche Güter beim Versetzen der Verpackungseinheit aus ihrer vorgesehenen Lagerposition geraten, dabei möglicherweise beschädigt werden und im weiteren Verarbeitungsprozess aussortiert werden müssen. Desweiteren besteht ein Nachteil bei den bisher bekannten Handhabeverfahren und -vorrichtungen darin, dass diese, insbesondere bei einer Ausführung als Industrieroboter, einen komplexen Aufbau aufweisen und einen vergleichsweise großen Raum einnehmen.

Der Erfindung liegt daher die Aufgabe zugrunde, ein verbessertes Handhabeverfahren für Verpackungseinheiten sowie eine entsprechende verbesserte Handhabevorrichtung anzugeben, die einzelne oder mehrere der oben genannten Nachteile verringern oder beseitigen. Insbesondere ist es Aufgabe der Erfindung, ein verbessertes Handhabeverfahren für Verpackungseinheiten sowie eine entsprechende verbesserte Handhabevorrichtung anzugeben, mit dem bzw. mit der die Handhabung von Verpackungseinheiten platzsparend und/oder schonend bei gleichzeitig hohem Materialdurchsatz durchgeführt wird.

Diese Aufgabe wird erfindungsgemäß gelöst durch ein Handhabeverfahren für Verpackungseinheiten mit den Schritten:
Fördern von Verpackungseinheiten entlang einer Zuführrichtung zu einer Umsetzvorrichtung mittels einer ersten Fördervorrichtung,

Fördern von Transporteinheiten parallel zu den Verpackungseinheiten entlang der Zuführrichtung zu der Umsetzungsvorrichtung mittels einer zweiten Fördervorrichtung,

Anordnen von einer, zwei oder mehreren Verpackungseinheiten nach einem ersten Setzmuster zu einer ersten Gruppe von Verpackungseinheiten auf einer Anordnungsfläche,

Greifen und Anheben der ersten Gruppe von Verpackungseinheiten mittels eines ersten Greifabschnitts eines Greifers der Umsetzvorrichtung,

Versetzen der ersten Gruppe von Verpackungseinheiten entlang einer Versetzrichtung von einer ersten Position über der ersten Fördervorrichtung zu einer zweiten Position über der zweiten Fördervorrichtung und

Absetzen der ersten Gruppe von Verpackungseinheiten in eine Transporteinheit, wobei das Anheben, Versetzen und Absetzen entlang einer Bewegungsbahn erfolgt, die in einer zu der Zuführrichtung orthogonalen Ebene liegt.

Bei einem erfindungsgemäßen Handhabeverfahren werden die Verpackungseinheiten vor einem Umsetzen zunächst nach einem ersten Setzmuster angeordnet, so dass die Verpackungseinheiten eine Gruppe von Verpackungseinheiten bilden. Vorzugsweise zeichnet sich das Setzmuster dadurch aus, dass die Verpackungseinheiten benachbart zueinander angeordnet sind und die gleiche Ausrichtung aufweisen, insbesondere in ihren Erstreckungsrichtungen parallel zueinander ausgerichtet sind. Weiter bevorzugt können die Verpackungseinheiten in einem Setzmuster angeordnet sein, bei dem die Verpackungseinheiten längs oder quer zur Zuführrichtung ausgerichtet sind oder bei runden bzw. ovalen Verpackungseinheiten versetzt zueinander angeordnet sind, um beispielsweise eine hohe Packungsdichte zu erzielen. Nachdem das Setzmuster gebildet wurde, wird die erste Gruppe von Verpackungseinheiten bei dem erfindungsgemäßen Verfahren als Gruppe gegriffen, angehoben, versetzt und abgesetzt. Dadurch werden mehrere Verpackungseinheiten gleichzeitig umgesetzt, so dass die für das Greifen, Anheben, Versetzen und Absetzen notwendigen Bewegungen mit geringen Beschleunigungen und Geschwindigkeiten durchgeführt werden können und gleichzeitig ein hoher Materialdurchsatz erzielt wird.

Vorzugsweise ist ferner die Kontrolle von Ober- und Unterbahnetikett in das Handhabeverfahren integriert.

Zudem werden bei dem erfindungsgemäßen Handhabeverfahren die Transporteinheiten parallel zu den Verpackungseinheiten entlang der Zuführrichtung zu der Umsetzvorrichtung geführt. Die parallele Führung der Verpackungseinheiten mittels der ersten Fördervorrichtung und der Transporteinheiten mittels der zweiten Fördervorrichtung ermöglicht einen platzsparenden Aufbau der Umsetzvorrichtung. Erfindungsgemäß ist die Umsetzvorrichtung im Wesentlichen oberhalb der ersten und zweiten Fördervorrichtung angeordnet. Auch dadurch wird der Platzbedarf in der Ausdehnung der Umsetzvorrichtung quer zur Zuführrichtung gering gehalten.

Die erste Position über der ersten Fördervorrichtung ist im Rahmen der vorliegenden Erfindung derart zu verstehen, dass sich ein Abschnitt des Greifers, der ausgebildet ist, Verpackungseinheiten zu halten, oberhalb der ersten Fördervorrichtung, vorzugsweise im Wesentlichen vertikal über ihr, befindet. Vorzugsweise ist der Abschnitt des Greifers in der ersten Position im Wesentlichen vertikal über der ersten Gruppe von Verpackungseinheiten angeordnet, bevor diese gegriffen und angehoben werden. Die zweite Position über der zweiten Fördervorrichtung ist im Rahmen der vorliegenden Erfindung derart zu verstehen, dass sich der Abschnitt des Greifers, in dem die Verpackungseinheiten gehalten werden, oberhalb der zweiten Fördervorrichtung, vorzugsweise im Wesentlichen vertikal über einer Verpackungseinheit, befindet.

Bevorzugt wird eine Verpackungseinheit von einer Verpackungsschale mit einer geschlossenen, oberseitigen Oberfläche gebildet. Die oberseitige Oberfläche kann beispielsweise von einer Versiegelungsfolie gebildet sein. Alternativ dazu kann die oberseitige Oberfläche von einem auf die Verpackungsschale gesetzten Deckel gebildet sein. Die Verpackungseinheit ist vorzugsweise mit einem Lebensmittel, insbesondere aus dem Bereich der Fleisch- oder Wurstwaren, gefüllt.

Weiter bevorzugt ist die erste und/oder zweite Fördervorrichtung als Band- oder Rollenförderer ausgebildet. Die Band- oder Rollenförderer können vorzugsweise ausgebildet sein, mehrere Verpackungseinheiten benachbart zueinander, insbesondere in Zuführrichtung gesehen hintereinander auf die Anordnungsfläche zu fördern. Dabei kann die Anordnungsfläche vorzugsweise von einem Endbereich der ersten Fördervorrichtung gebildet sein, d.h. von einem Bereich der ersten Fördervorrichtung, der das Ende der ersten Fördervorrichtung in Zufuhrrichtung gesehen bildet, beispielsweise mittels einer Anschlagwand.

Die Transporteinheiten können beispielsweise als Transportkisten, Paletten, Wannen, Körbe, etc. ausgebildet sein. Die Transporteinheiten können im Wesentlichen kistenförmig, nach oben offen geformt sein und/oder Kunststoff, und/oder Metall aufweisen oder aus diesem bestehen. Die Transporteinheiten dienen vorzugsweise dazu, größere Gebinde von mehreren Verpackungseinheiten zu bilden, die in einer Transporteinheit gelagert sind. Die in den Transporteinheiten befindlichen Gebinde von Verpackungseinheiten können in den Transporteinheiten zu einem anderen Ort, beispielsweise zu einem Verbrauchermarkt, transportiert werden.

Das Anordnen von einer, zwei oder mehreren Verpackungseinheiten nach einem ersten Setzmuster kann vorzugsweise dadurch erfolgen, dass zunächst eine erste Verpackungseinheit auf die Anordnungsfläche gefördert wird und zeitlich darauf folgend wenigstens eine zweite Verpackungseinheit auf die Anordnungsfläche benachbart zu der ersten Verpackungseinheit gefördert wird. D.h. die beiden Verpackungseinheiten werden in Zuführrichtung hintereinander angeordnet. Entsprechend können weitere Verpackungseinheiten in Zuführrichtung gesehen hintereinander, benachbart zu der ersten und zweiten Verpackungseinheit angeordnet werden. Dadurch werden beispielsweise Setzmuster gebildet, bei denen 1, 2, 3, etc. Verpackungseinheiten hintereinander angeordnet werden.

Das Greifen und Anheben, Versetzen und Absetzen der ersten Gruppe von Verpackungseinheiten kann bevorzugt erfolgen durch Greifen der ersten Gruppe von Verpackungseinheiten und Bewegen derselben in einer zur Zuführrichtung orthogonalen Ebene mittels einer Positionier-Einrichtung. Die Positionier-Einrichtung kann als Teilelement integraler Bestandteil der Umsetzvorrichtung sein und den Greifer in unterschiedliche Positionen in einer zur Zuführrichtung orthogonalen Ebene bewegen. Eine Positionier-Einrichtung ist vorzugsweise als ein- oder mehrachsiges System zur Positionierung des Greifers der Umsetzvorrichtung ausgebildet. Beispielsweise kann die Positionier-Einrichtung von einem Kreuztisch, d.h. einem Zweiachssystem bestehend aus zwei einachsigen Linearführungssystemen, gebildet sein, wobei eine erste Koordinatenachse des Kreuztisches im Wesentlichen in vertikaler Richtung ausgerichtet ist, insbesondere orthogonal zur Zuführrichtung, und eine zweite Koordinatenachse des Kreuztisches im Wesentlichen in horizontaler Richtung ausgerichtet ist, insbesondere ebenfalls orthogonal zur Zuführrichtung, so dass das Zweiachssystem des Kreuztisches vorzugsweise in einer Ebene orthogonal zur Zuführrichtung ausgerichtet ist.

Durch das Versetzen der Verpackungseinheiten in einer zur Zuführrichtung im Wesentlichen orthogonalen Ebene erfolgt das Handhaben der Verpackungseinheiten zudem auf einem besonders kompakten Raum. Insbesondere in Kombination mit dem parallelen Zuführen der Verpackungs- und Transporteinheiten wird durch das Versetzen orthogonal zur Zuführrichtung ein platzsparendes Verfahren erzielt, beispielsweise im Unterschied zu typischen Pick-And-Place-Versetzeinrichtungen, wie Roboterarmen, deren Bewegungen meist nicht nur in einer Ebene stattfinden.

Eine bevorzugte Ausführungsform des erfindungsgemäßen Handhabeverfahrens ist gekennzeichnet durch die Schritte:
Anordnen von einer, zwei oder mehreren Verpackungseinheiten nach einem zweiten Setzmuster zu einer zweiten Gruppe von Verpackungseinheiten auf der Anordnungsfläche,

Greifen und Anheben der zweiten Gruppe von Verpackungseinheiten mittels eines zweiten Greifabschnitts des Greifers der Umsetzvorrichtung und

Versetzen der zweiten Gruppe von Verpackungseinheiten entlang der Versetzrichtung von einer Zwischenposition über der ersten Fördervorrichtung zu einer zweiten Position über der zweiten Fördervorrichtung,
wobei beim Absetzen der ersten Gruppe von Verpackungseinheiten in eine Transporteinheit gleichzeitig auch die zweite Gruppe von Verpackungseinheiten in die gleiche Transporteinheit abgesetzt wird.

Bei dieser Ausführungsform wird vorzugsweise nach dem Anheben der ersten Gruppe von Verpackungseinheiten eine zweite Gruppe von Verpackungseinheiten auf der Anordnungsfläche nach einem zweiten Setzmuster angeordnet, wobei das zweite Setzmuster vorzugsweise ähnlich oder im Wesentlichen identisch zu dem ersten Setzmuster ist. Die zweite Gruppe von Verpackungseinheiten wird dann mittels des zweiten Greifabschnitts des Greifers gegriffen und angehoben, so dass vorzugsweise die erste Gruppe von Verpackungseinheiten gemeinsam mit der zweiten Gruppe versetzt wird. Dadurch werden Bewegungsschritte eingespart und gleichzeitig ein hoher Materialfluss ermöglicht. Es ist besonders bevorzugt, dass die erste und zweite Gruppe von Verpackungseinheiten, die gemeinsam auch als Lage oder Gebinde bezeichnet werden können, immer gleichzeitig in einen Transportbehälter gesetzt werden.

Eine weitere bevorzugte Ausführungsform des erfindungsgemäßen Handhabeverfahrens ist dadurch gekennzeichnet, dass das Anheben in einer im Betriebszustand im Wesentlichen vertikalen Richtung erfolgt, vorzugsweise in einer im Betriebszustand im Wesentlichen nach oben gerichteten Richtung.

Dabei werden in den Verpackungseinheiten befindliche Güter besonders schonend bewegt, so dass seitliche, d.h. horizontale Bewegungskomponenten, beim Anheben vermieden werden. Insbesondere bei einem Anheben von Verpackungseinheiten, die Fleischwaren wie beispielsweise Würste oder Hackfleisch beinhalten, werden die Fleischwaren beim Anheben in ihrer Position und Orientierung belassen. Hierbei sind auch große Beschleunigungen möglich, da bei einer vertikalen Beschleunigung ein seitliches bzw. horizontales Verrutschen der in den Verpackungseinheiten befindlichen Güter vermieden wird.

Gemäß einer weiteren bevorzugten Ausführungsform des erfindungsgemäßen Handhabeverfahrens erfolgt das Absetzen in einer im Betriebszustand im Wesentlichen vertikalen Richtung, vorzugsweise in einer im Betriebszustand im Wesentlichen nach unten gerichteten Richtung. Auch durch diese Form des Absetzens in einer im Wesentlichen vertikalen Richtung werden die zuletzt genannten Vorteile erzielt.

Gemäß einer weiteren bevorzugten Ausführungsform des erfindungsgemäßen Handhabeverfahrens erfolgt das Versetzen in einer im Betriebszustand im Wesentlichen horizontalen Richtung. Damit beispielsweise in den Verpackungseinheiten befindliche Fleischwaren in ihrer Position belassen werden, ist die Bewegungsgeschwindigkeit in horizontaler Richtung vorzugsweise geringer als die Bewegungsgeschwindigkeit in vertikaler Richtung. Durch diese Trennung von horizontalen und vertikalen Bewegungsschritten können unterschiedliche Geschwindigkeiten und Beschleunigungen der vertikalen und horizontalen Bewegung der Verpackungseinheiten einfach realisiert werden.

Eine weitere bevorzugte Ausführungsform des erfindungsgemäßen Handhabeverfahrens ist dadurch gekennzeichnet, dass der Greifer beim Versetzen der ersten und zweiten Gruppe eine Bewegungsrichtung entlang der Versetzrichtung beibehält. Bei dieser Ausführungsform wird der Greifer nach dem Anheben der ersten Gruppe von Verpackungseinheiten soweit in Versetzrichtung bewegt, bis der zweite Greifabschnitt des Greifers oberhalb der zweiten Gruppe von Verpackungseinheiten angeordnet ist. Nach dem Anheben der zweiten Gruppe wird die Bewegung in Versetzrichtung fortgesetzt. Dabei bewegt sich der Greifer weder beim Greifen, Anheben, Versetzen oder Absetzen entgegengesetzt zur Versetzrichtung. Erst nach dem Absetzen der ersten und zweiten Gruppe von Verpackungseinheiten in die Transporteinheit erfolgt eine Bewegung des Greifers entgegengesetzt zur Versetzrichtung, um erneut eine erste Gruppe von Verpackungseinheiten zu greifen und anzuheben. Dadurch wird eine effiziente Bewegungsführung mit einer geringen Anzahl von Bewegungen und gleichzeitig kurzen Versetzwegen erzielt. Dies ermöglicht einen hohen Materialdurchsatz bei gleichzeitig geringen Geschwindigkeiten und Beschleunigungen, insbesondere bei Bewegungen, die zu einem Verrutschen der Güter in den Verpackungseinheiten führen können.

Eine weitere bevorzugte Ausführungsform des erfindungsgemäßen Handhabeverfahrens ist gekennzeichnet durch den Schritt Ausrichten von Verpackungseinheiten mittels einer Ausrichteeinheit zur Erzielung des ersten bzw. zweiten Setzmusters. Für das Anordnen von einer, zwei oder mehreren Verpackungseinheiten nach einem Setzmuster kann es vorteilhaft sein, die Verpackungseinheiten in einer vorgegebenen Richtung auszurichten. Das kann heißen, dass beispielsweise Verpackungseinheiten mit einer rechteckigen Grundfläche derart zueinander ausgerichtet werden, dass ihre Langseiten oder Schmalseiten im Wesentlichen parallel zueinander ausgerichtet sind. Werden beispielsweise Verpackungseinheiten auf einem Bandförderer derart in Zuführrichtung gefördert, dass ihre Langseiten jeweils parallel zur Zuführrichtung ausgerichtet sind, kann es wünschenswert sein, die Langseite der Verpackungseinheit für das Setzmuster quer zur Zuführrichtung auszurichten.

Dabei kann die Ausrichteeinheit vorzugsweise als Anschlagelement ausgeführt sein, gegen das die Verpackungseinheit bei der Förderbewegung stößt, so dass diese um eine im Wesentlichen vertikale Achse gedreht wird. Insbesondere bei einem angetriebenen Bandförderer wird die Verpackungseinheit durch die Förderbewegung des Bandes in Verbindung mit dem außermittigen Anschlag an dem Anschlagelement in eine entsprechende Drehbewegung versetzt. Weiter bevorzugt kann das Anschlagelement von einer Passivposition in eine Ausrichteposition beweglich sein, so dass Verpackungseinheiten nicht ausgerichtet werden, wenn sich das Anschlagelement in der Passivposition befindet. Wenn sich das Anschlagelement in der Ausrichteposition befindet oder in diese bewegt wird, werden die Verpackungseinheiten ausgerichtet. Die Bewegung des Anschlagelements von der Passiv- in die Ausrichteposition und zurück kann vorzugsweise orthogonal zur Zuführrichtung erfolgen. Bevorzugt kann das Anschlagelement als zylinderförmiger Pin ausgebildet sein, gegen den die Verpackungseinheit stößt. Dazu verfährt der Pin vorzugsweise in einer Richtung quer zur Zuführrichtung in einer Ebene parallel zur Förderebene, pneumatisch oder hydraulisch. Dies erfolgt vorzugsweise derart, dass eine Ecke einer Verpackungseinheit gegen den Pin stößt und eine Drehung der Verpackungseinheit bewirkt wird. Vorzugsweise schlägt das Anschlagelement frontal gegen eine Verpackungseinheit, um diese auszurichten. Ferner kann bevorzugt sein, dass das Anschlagelement außermittig gegen eine Verpackungseinheit stößt, um diese auszurichten.

Eine Ausrichteeinheit kann insbesondere dann vorteilhaft sein, wenn die mittels eines Bandförderers zugeführten Verpackungseinheiten unterschiedlich, insbesondere stochastisch, ausrichtet sind. Dann kann das Ausrichten beispielsweise mittels einer Ausrichtefläche erfolgen, die von einer im Wesentlichen geraden Fläche gebildet wird, die schräg bzw. in einem Winkel zur Zuführrichtung verläuft und ferner eine Ausdehnung in im Wesentlichen vertikaler Richtung aufweist. Diese schräg zur Zuführrichtung verlaufende Fläche dient beispielsweise dazu, eine Verpackungseinheit in eine vorgegebene Spur, d.h. in einen Teilbereich der Fördervorrichtung quer zur Zuführrichtung gesehen, auf der Fördervorrichtung zu führen. Die Ausrichtefläche kann zudem eine Ausnehmung in Förderrichtung aufweisen, aus der der Pin zum Anstoßen gegen die Verpackungseinheit ausgefahren werden kann. Desweiteren kann das Ausrichten beispielsweise mittels einer Ausrichtefläche erfolgen, welche in Zuführrichtung gesehen zumindest in einem Teilbereich derart ausgebildet und angeordnet ist, dass diese an ihrem Ende in Zuführrichtung gesehen im Wesentlichen parallel zur Zuführrichtung ausgerichtet ist. D.h. beispielsweise, dass die Ausrichtefläche in Zuführrichtung gesehen zunächst schräg ausgerichtet ist und derart ausgebildet und angeordnet ist, dass sie zum Ende hin im Wesentlichen parallel zur Zuführrichtung ausgerichtet ist. Bevorzugt werden dabei zwei Ausrichteebenen im Förderweg angeordnet, die zu einer in Zuführrichtung verlaufenden, vorzugsweise im Wesentlichen vertikalen, Ebene spiegelsymmetrisch ausgebildet sind. Dadurch kann eine exakte Führung der Verpackungseinheiten von beiden Seiten quer zur Zuführrichtung erzielt werden.

Eine weitere bevorzugte Ausführungsform des erfindungsgemäßen Handhabeverfahrens ist dadurch gekennzeichnet, dass das Anheben, Versetzen und Absetzen der ersten und zweiten Gruppe von Verpackungseinheiten wie folgt abläuft:
- Positionieren des ersten Greifabschnitts des Greifers in der ersten Position,
- Greifen der ersten Gruppe mittels des ersten Greifabschnitts des Greifers,
- Anheben der ersten Gruppe von Verpackungseinheiten in einer im Wesentlichen vertikalen Richtung,
- Versetzen der ersten Gruppe in einer im Wesentlichen horizontalen Richtung in eine Zwischenposition, in der sich der zweite Greifabschnitt des Greifers über der ersten Fördervorrichtung befindet,
- Greifen der zweiten Gruppe mittels des zweiten Greifabschnitts des Greifers,
- Anheben der mittels des zweiten Greifabschnitts des Greifers gegriffenen zweiten Gruppe von Verpackungseinheiten in einer im Wesentlichen vertikalen Richtung,
- Versetzen der ersten und zweiten Gruppe in einer im Wesentlichen horizontalen Richtung in die zweite Position, in der sich der Greifer über der zweiten Förderrichtung befindet und
- Absetzen der ersten und zweiten Gruppe in eine Transporteinheit in einer im Wesentlichen vertikalen Richtung.

Diese Ausführungsform des erfindungsgemäßen Handhabeverfahrens stellt eine bevorzugte Weiterbildung der oben beschriebenen Ausführungsformen und Fortbildungen dar. Für das Greifen der ersten Gruppe mittels des ersten Greifabschnitts muss der Greifer im Wesentlichen aus der ersten Position vertikal nach unten zum Greifen der Verpackungseinheiten über einen vorgegebenen Weg V1 mittels der Positionier-Einrichtung gefahren werden. Für das Anheben der ersten Gruppe von Verpackungseinheiten wird der Greifer in einer im Wesentlichen vertikalen Richtung entgegengesetzt zu dem vorgegebenen Weg V1 nach oben bewegt. Die erste Position des ersten Greifabschnitts gemäß dieser Ausführungsform stellt eine Konkretisierung des vorstehend beschriebenen Begriffs "erste Position" dar, d.h. in der ersten Position des ersten Greifabschnitts ist der erste Greifabschnitt im Wesentlichen oberhalb der ersten Gruppe von Verpackungseinheiten angeordnet. Über einen weiteren Weg H1 erfolgt dann das Versetzen der ersten Gruppe in einer im Wesentlichen horizontalen Versetzrichtung derart, dass sich der zweite Greifabschnitt nach dem Versetzen der ersten Gruppe im Wesentlichen in der Zwischenposition oberhalb einer inzwischen auf der Anordnungsfläche angeordneten zweiten Gruppe von Verpackungseinheiten befindet. Zum Greifen der zweiten Gruppe wird der Greifer im Wesentlichen vertikal nach unten über einen weiteren Weg V2 bewegt. Zum Anheben wird der Greifer in entgegengesetzter Richtung in einer im Wesentlichen vertikalen Richtung nach oben bewegt. Eine Wegstrecke V2, welche größer als die Wegstrecke V1 ist, kann insbesondere bei Verpackungseinheiten vorgesehen sein, bei denen die zweite Gruppe von Verpackungseinheiten eine geringere Höhe als die erste Gruppe von Verpackungseinheiten aufweist. Eine Wegstrecke V2, die kleiner als die Wegstrecke V1 ist, kann insbesondere bei Verpackungseinheiten vorgesehen sein, bei denen die zweite Gruppe von Verpackungseinheiten eine größere Höhe aufweist als die erste Gruppe von Verpackungseinheiten. Das Versetzen der ersten und zweiten Gruppe in einer im Wesentlichen horizontalen Versetzrichtung erfolgt dabei über einen Weg H2, welcher in der Regel größer als der Weg H1 ist. Über einen Weg V3 erfolgt das Absetzen der ersten und zweiten Gruppe in eine Transporteinheit. Die Wegstrecke V3 kann in Abhängigkeit von der Anordnung der Transporteinheit in vertikaler Richtung kleiner, gleichgroß oder größer sein als die Wegstrecken V1 und/oder V2.

Für das erneute Greifen einer ersten Gruppe von Verpackungseinheiten wird der Greifer in die erste Position zurückversetzt durch Bewegen des Greifers in einer zur Versetzrichtung entgegengesetzten Richtung über eine Wegstrecke, welche im Wesentlichen gleich groß zu der Summe der Wegstrecken H1 und H2 ist.

Die eingangs genannte Aufgabe wird zudem gelöst durch eine Handhabevorrichtung zur Durchführung eines Handhabeverfahrens für Verpackungseinheiten umfassend eine erste Fördervorrichtung zum Fördern von Verpackungseinheiten entlang einer Zuführrichtung zu einer Umsetzvorrichtung mit einem Greifer mit einem ersten Greifabschnitt, eine zweite, parallel zu der ersten angeordnete Fördervorrichtung zum Fördern von Transporteinheiten parallel zu den Verpackungseinheiten entlang der Zuführrichtung zu der Umsetzvorrichtung, wobei die erste Fördervorrichtung ausgebildet ist, eine, zwei oder mehrere Verpackungseinheiten nach einem vorbestimmten Setzmuster zu einer ersten Gruppe von Verpackungseinheiten auf einer Anordnungsfläche anzuordnen, und wobei der Greifer der Umsetzvorrichtung angeordnet und ausgebildet ist, eine Bewegungsbahn zu vollziehen, die in einer zu der Zuführrichtung orthogonalen Ebene liegt und entlang welcher die erste Gruppe von Verpackungseinheiten mittels des ersten Greifabschnitts des Greifers gegriffen und angehoben, entlang einer Versetzrichtung von einer ersten Position über der ersten Fördervorrichtung zu einer zweiten Position über der zweiten Fördervorrichtung versetzt und in eine Transporteinheit abgesetzt wird.

Damit wird eine besonders platzsparende Handhabevorrichtung erzielt, mittels derer ein hoher Durchsatz von Verpackungseinheiten erzielt wird. Bevorzugt umfasst die Handhabevorrichtung eine Positionier-Einrichtung als integralen Bestandteil der Umsetzvorrichtung, die ausgebildet ist, den Greifer innerhalb der zur Zuführrichtung orthogonalen Ebene zu positionieren. Das heißt die Positionier-Einrichtung ist ausgebildet, den Greifer oberhalb der ersten Gruppe von Verpackungseinheiten in einer ersten Position zum Greifen derselben zu positionieren. Zudem ist die Positionier-Einrichtung ausgebildet, den Greifer oberhalb einer Transporteinheit in einer zweiten Position zu positionieren, insbesondere zwischen Seitenwänden der Transporteinheit zum Absetzen der Gruppe von Verpackungseinheiten. Des Weiteren ist die Positionier-Einrichtung ausgebildet, den ersten Greifabschnitt oberhalb der ersten Gruppe von Verpackungseinheiten und den zweiten Greifabschnitt oberhalb der zweiten Gruppe von Verpackungseinheiten zu positionieren.

Eine bevorzugte Ausführungsform der erfindungsgemäßen Handhabevorrichtung ist **dadurch gekennzeichnet, dass** der Greifer einen ersten und zweiten Greifabschnitt umfasst, die benachbart zueinander angeordnet sind. Dadurch wird eine besonders kompakte und platzsparende Bauweise insbesondere dann erzielt, wenn der erste und zweite Greifabschnitt angrenzend zueinander angeordnet sind. Durch die benachbart zueinander angeordneten Greifabschnitte wird zudem ein kurzer Versetzweg H1 zwischen dem Greifen der ersten und zweiten Gruppe erzielt, der zudem vorteilhaft mit einer Bewegung ausschließlich entlang der Versetzrichtung erreicht werden kann.

Eine weitere bevorzugte Ausführungsform der erfindungsgemäßen Handhabevorrichtung ist **dadurch gekennzeichnet, dass** der erste und zweite Greifabschnitt des Greifers in einer gemeinsamen, vorzugsweise im Betriebszustand der Umsetzvorrichtung im Wesentlichen horizontalen Ebene angeordnet sind. Insbesondere bei einer ersten und zweiten Gruppe von Verpackungseinheiten, welche eine gleiche Höhe aufweisen, kann durch die Ausführungsform ein besonders einfacher und platzsparender Aufbau des Greifers ermöglicht werden.

Eine weitere bevorzugte Ausführungsform der erfindungsgemäßen Handhabevorrichtung ist **dadurch gekennzeichnet, dass** der erste und zweite Greifabschnitt des Greifers derart angeordnet sind, dass der erste Greifabschnitt auf einem der ersten Fördervorrichtung zugewandten Teil des Greifers und der zweite Greifabschnitt auf einem der zweiten Fördervorrichtung zugewandten Teil des Greifers angeordnet ist. Dadurch wird ein besonders kompakter Aufbau der Umsetzvorrichtung erzielt. Zudem werden die Verfahrwege des Greifers, d.h. die von dem Greifer zurückgelegten Wegstrecken, klein gehalten. Der Begriff "zugewandter Teil" ist im Rahmen der vorliegenden Erfindung derart zu verstehen, dass bei einer Betrachtung der Umsetzvorrichtung von oben und einer Positionierung des Greifers von oben gesehen zwischen der ersten und zweiten Fördervorrichtung der erste Greifabschnitt der ersten Fördervorrichtung zugewandt ist bzw. sich mit dieser überschneidet und der zweite Greifabschnitt der zweiten Fördervorrichtung zugewandt ist bzw. sich mit dieser überschneidet. Das heißt, dass in Versetzrichtung gesehen der erste und zweite Greifabschnitt hintereinander, nämlich der erste Greifabschnitt in Versetzrichtung vorne und der zweite Greifabschnitt in Versetzrichtung hinten, angeordnet sind.

Eine weitere bevorzugte Ausführungsform der erfindungsgemäßen Handhabevorrichtung ist **dadurch gekennzeichnet, dass** eine Ausrichteeinheit ausgebildet ist, Verpackungseinheiten zur Erzielung des ersten bzw. zweiten Setzmusters auszurichten. Die Ausrichteeinheit dient bevorzugt dazu, Verpackungseinheiten in ihrer Erstreckungsrichtung im Wesentlichen parallel zueinander auszurichten. Die Ausrichteeinheit ist bevorzugt wie die oben mit Bezug auf das erfindungsgemäße Handhabeverfahren bzw. seine Fortbildungen beschriebene Ausrichteeinheit ausgeführt.

Bei einer weiteren bevorzugten Ausführungsform der erfindungsgemäßen Handhabevorrichtung umfasst die Ausrichteeinheit ein Anschlagelement, welches derart angeordnet und ausgebildet ist, dass eine mittels der ersten Fördervorrichtung geförderte Verpackungseinheit um eine Achse gedreht wird, die orthogonal zur Zuführrichtung, vorzugweise vertikal, ausgerichtet ist. Das Anschlagelement ist bevorzugt wie das oben mit Bezug auf das erfindungsgemäße Handhabeverfahren bzw. seine Fortbildungen beschriebene Anschlagelement ausgeführt.

Eine weitere bevorzugte Ausführungsform der erfindungsgemäßen Handhabevorrichtung ist **dadurch gekennzeichnet, dass** der erste und/oder zweite Greifabschnitt mindestens einen Sauggreifer umfasst, der ausgebildet ist eine Oberfläche einer Verpackungseinheit mittels Ansaugen zu greifen und/oder zu halten. Bevorzugt sind dabei mehrere Sauggreifer über einen Greifabschnitt verteilt angeordnet. Beispielsweise ist jeweils ein Sauggreifer zum Ansaugen einer Verpackungseinheit vorgesehen oder jeweils mehrere Sauggreifer sind zum Ansaugen einer Verpackungseinheit vorgesehen. Ein Sauggreifer kann beispielsweise als Saugglocke ausgebildet sein und eine Vakuumpumpe aufweisen. Wenn ein Sauggreifer auf eine oberseitige Oberfläche einer Verpackungseinheit gesetzt wird, kann mittels einer an den Sauggreifer angeschlossenen Vakuumpumpe ein Unterdruck (d.h. ein im Vergleich zum Atmosphärendruck kleinerer Druck) erzeugt werden, so dass der Atmosphärendruck die Verpackungseinheit an den Sauggreifer drückt. Das Greifen kann zudem im Wesentlichen unabhängig von der genauen Position des Verpackungselements erfolgen, solange sich die oberseitige Oberfläche unterhalb der Sauggreifer befindet.

Die erfindungsgemäße Handhabevorrichtung und ihre Fortbildungen weisen Merkmale auf, die sie insbesondere dafür geeignet machen, ein erfindungsgemäßes Handhabeverfahren für Verpackungseinheiten und seine Fortbildungen durchzuführen. Zu Vorteilen, Ausführungsvarianten und Ausführungsdetails dieser Handhabevorrichtung und ihrer Fortbildungen wird auch auf die vorangegangene Beschreibung zu den entsprechenden Verfahrensmerkmalen verwiesen.

Bevorzugte Ausführungsformen werden beispielhaft anhand der beiliegenden Figuren beschrieben. Es zeigen:
Figur 1: eine schematische Darstellung eines Teils eines ersten Ausführungsbeispiels einer erfindungsgemäßen Handhabevorrichtung in unterschiedlichen Zwischenzuständen einer beispielhaften Ausführung eines erfindungsgemäßen Handhabeverfahrens,
Figur 2: den in Figur 1 gezeigten ersten Teil des Ausführungsbeispiels in einer Ansicht von oben,
Figur 3: ein zweites Ausführungsbeispiel einer erfindungsgemäßen Handhabevorrichtung in einer Seitenansicht,
Figur 4: das in Figur 3 gezeigte zweite Ausführungsbeispiel in einer Ansicht von oben,
Figur 5: das in den Figuren 3 und 4 gezeigte zweite Ausführungsbeispiel in einer Ansicht in Zuführrichtung und
Figur 6: schematisch den Bewegungsverlauf einer Ausführungsform eines Greifers einer beispielhaften erfindungsgemäßen Handhabevorrichtung.

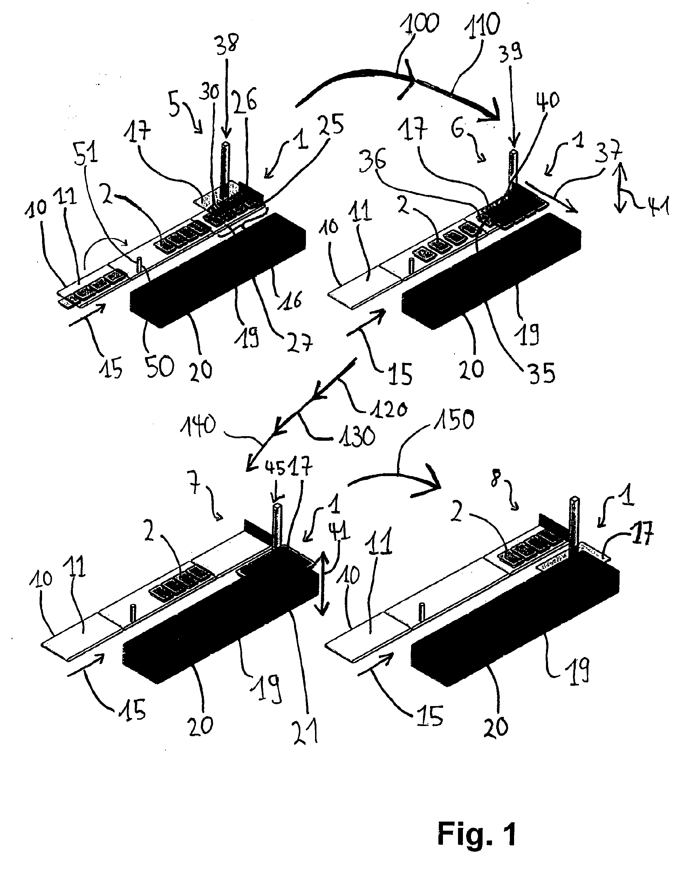

Figur 1 zeigt eine schematische Darstellung eines Teils eines ersten Ausführungsbeispiels einer erfindungsgemäßen Handhabevorrichtung 1 zur Durchführung einer Ausführungsform eines erfindungsgemäßen Handhabeverfahrens für Verpackungseinheiten 2 in unterschiedlichen Zwischenzuständen 5, 6, 7 und 8. Ein Bandförderer 10, welcher als erste Fördervorrichtung 11 vorgesehen ist, dient zum Fördern von Verpackungseinheiten 2 entlang einer Zuführrichtung 15 zu einem Abschnitt 16 des Bandförderers 10, welcher sich unterhalb eines Greifers 17 befindet. Der Greifer 17 ist dabei integraler Bestandteil einer Umsetzvorrichtung deren vollständiger Aufbau in Figur 1 nicht gezeigt ist. Mittels des Bandförderers 10 werden in einem ersten Verfahrensschritt Verpackungseinheiten 2 entlang der Zuführrichtung 15 zu der Umsetzvorrichtung gefördert. Mittels einer zweiten Fördervorrichtung (nicht gezeigt) werden kistenförmige Wannen 19, welche als Transporteinheiten 20 vorgesehen sind, parallel zu den Verpackungseinheiten 2 entlang der Zuführrichtung 15 zu der Umsetzvorrichtung gefördert.

In einem weiteren Verfahrensschritt werden mehrere Verpackungseinheiten 2 derart mittels des Bandförderers 10 gefördert, dass diese nach einem ersten Setzmuster 25 zu einer ersten Gruppe 26 von Verpackungseinheiten 2 in dem Abschnitt 16 des Bandförderers 10, welcher als eine Anordnungsfläche 27 vorgesehen ist, angeordnet werden. Der Greifer 17 der Umsetzvorrichtung ist derart angeordnet und ausgebildet, eine Bewegungsbahn zu vollziehen, die in einer zu der Zuführrichtung 15 orthogonalen Ebene liegt. Der Greifer 17 weist zudem einen ersten Greifabschnitt 30 auf, mittels dessen die erste Gruppe 26 von Verpackungseinheiten 2 gegriffen und abgehoben werden kann.

In einem Verfahrensschritt 100 wird die ersten Gruppe 26 von Verpackungseinheiten 2 mittels des ersten Greifabschnitts 30 des Greifers 17 gegriffen und angehoben. Dazu wird der Greifer 17 zunächst in eine erste Position 38 gefahren, in welcher der erste Greifabschnitt 30 im Wesentlichen vertikal über der ersten Gruppe 26 angeordnet ist. Das Anheben erfolgt dabei in einer im Wesentlichen vertikalen Richtung 41 nach oben. In einem weiteren Verfahrensschritt 110 werden mehrere Verpackungseinheiten 2 nach einem zweiten Setzmuster 35 zu einer zweiten Gruppe 36 von Verpackungseinheiten 2 auf der Anordnungsfläche 27 angeordnet.

Während die zweite Gruppe 36 auf der Anordnungsfläche 27 angeordnet wird, wird der Greifer 17 mittels einer Positionier-Einrichtung (nicht gezeigt) in einer Versetzrichtung 37 von der ersten Position 38 über dem Bandförderer 10 - insbesondere eine erste Position 38, in der der erste Greifabschnitt 30 oberhalb der ersten Gruppe 26 angeordnet ist - in eine Zwischenposition 39 bewegt. Dieses Versetzen erfolgt dabei in einer im Wesentlichen horizontalen Richtung, d.h. die Versetzrichtung 37 ist im Wesentlichen horizontal ausgerichtet. In der Zwischenposition 39 befindet sich ein zweiter Greifabschnitt 40 des Greifers 17 über der ersten Fördervorrichtung 11, insbesondere oberhalb der zweiten Gruppe 36.

In einem weiteren Verfahrensschritt 120 wird die zweite Gruppe 36 mittels des zweiten Greifabschnitts 40 des Greifers 17 gegriffen. Der erste und zweite Greifabschnitt 30 und 40 sind angrenzend benachbart zueinander angeordnet. Insbesondere sind der erste und zweite Greifabschnitt 30 und 40 in einer gemeinsamen Ebene angeordnet, die im Betriebszustand der Umsetzvorrichtung im Wesentlichen horizontal ausgerichtet ist. Das heißt, dass der erste Greifabschnitt 30 und der zweite Greifabschnitt 40 in Versetzrichtung 37 gesehen im Wesentlichen hintereinander angeordnet sind. Dabei ist der erste Greifabschnitt 30 in Versetzrichtung gesehen vorne und der zweite Greifabschnitt 40 in Versetzrichtung gesehen hinten angeordnet. In einem weiteren Verfahrensschritt 130 wird die mittels des zweiten Greifabschnitts 40 gegriffene zweite Gruppe 36 in einer im Wesentlichen vertikalen Richtung 41 nach oben angehoben. Zeitlich darauf folgend werden in einem Verfahrensschritt 140 die erste 26 und zweite Gruppe 36 in einer im Wesentlichen horizontalen Versetzrichtung 37 in eine zweite Position 45 versetzt. In der zweiten Position 45 befindet sich der Greifer 17 über der zweiten Fördervorrichtung. In einem weiteren Verfahrensschritt 150 werden die erste 26 und zweite Gruppe 36 in eine Transporteinheit 21 in einer im Wesentlichen vertikalen Richtung 41 abgesetzt.

Im Förderweg der Verpackungseinheiten 2 ist ein Zylinder 50 angeordnet, welcher als eine Ausrichteeinheit 51 vorgesehen ist. Beim Fördern der Verpackungseinheiten 2 in Zuführrichtung 15 stoßen die Verpackungseinheiten 2 derart gegen den Zylinder 50, dass diese - zusätzlich zu der Translationsbewegung in Förderrichtung - um eine im Wesentlichen vertikale Achse gedreht werden. Der Zylinder dient dabei als Anschlagelement 52. Die Verpackungseinheiten 2, welche beispielsweise in Zuführrichtung 15 ausgerichtet sind, d.h. deren Langseiten parallel zur Zuführrichtung 15 ausgerichtet sind, werden mittels des Anschlagelements 52 derart gedreht, dass ihre Langseiten im Wesentlichen orthogonal zur Zuführrichtung 15 ausgerichtet werden. Vorzugsweise schlägt das Anschlagelement 52 frontal gegen die Verpackungseinheiten 2, um diese auszurichten. Ferner kann bevorzugt sein, dass das Anschlagelement 52 außermittig gegen eine Verpackungseinheit 2 stößt, um diese auszurichten.

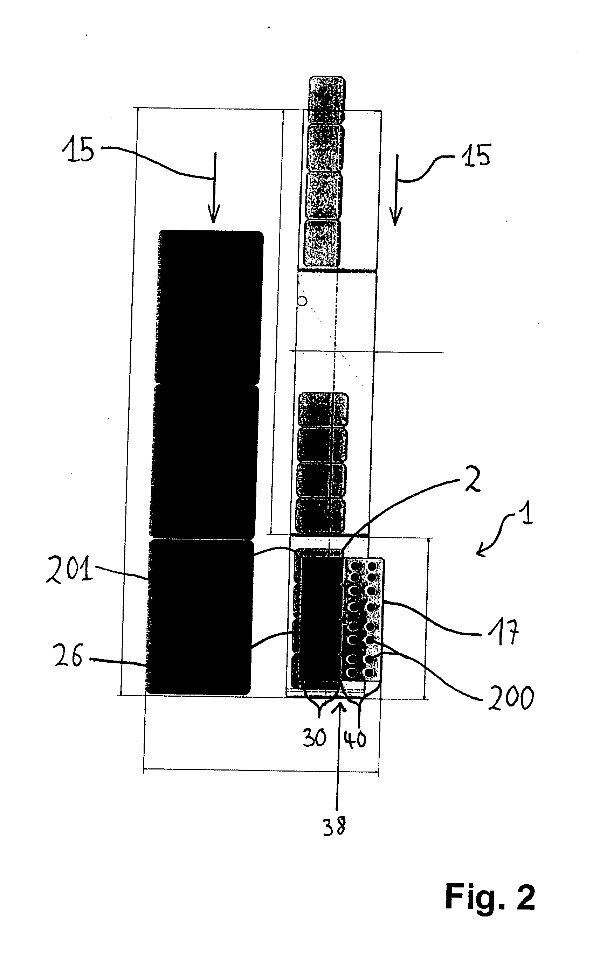

Figur 2 zeigt das in Figur 1 gezeigte Ausführungsbeispiel einer Handhabevorrichtung 1 in einer Ansicht von oben. Dabei sind gleiche oder funktionsgleiche Elemente mit denselben Bezugszeichen versehen. In dem in Figur 2 gezeigten Zustand befindet sich der Greifer 17 in der in Figur 1 gezeigten Position 38 oberhalb der ersten Gruppe 26 von Verpackungseinheiten 2. Der erste Greifabschnitt 30 sowie der zweite Greifabschnitt 40 weisen jeweils mehrere Sauggreifer 200 auf, die ausgebildet sind, die dem Betrachter zugewandten Oberflächen 201 der Verpackungseinheiten 2 anzusaugen. Dadurch werden die Verpackungseinheiten 2 gegriffen und gehalten.

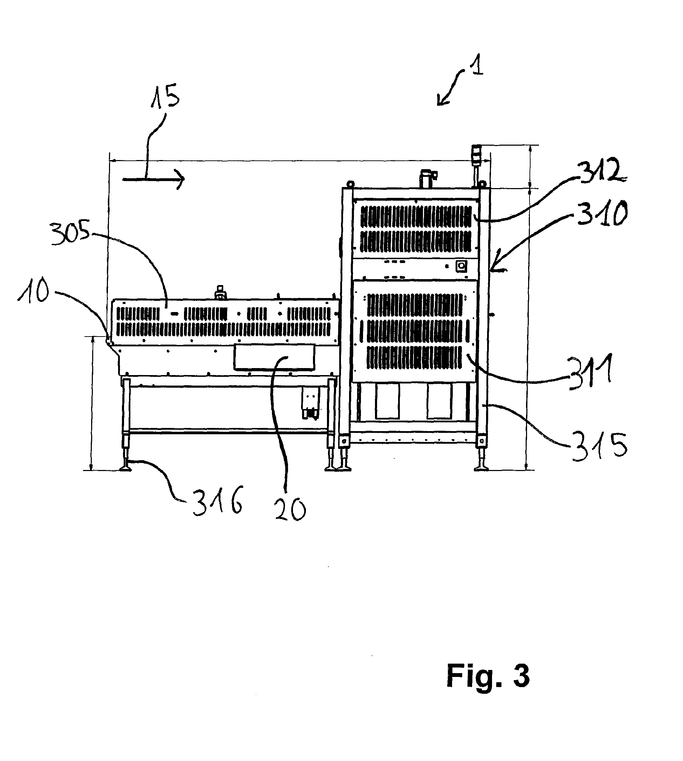

Figur 3 zeigt ein zweites Ausführungsbeispiel einer erfindungsgemäßen Handhabevorrichtung 1 in einer Seitenansicht, d.h. die Betrachtungsrichtung in Figur 3 verläuft orthogonal zur Zuführrichtung 15. Ein Bandförderer 10 ist dabei von Blenden 305 im Wesentlichen seitlich umschlossen. Eine Umsetzvorrichtung 310 ist in Betrachtungsrichtung gesehen von den Blenden 311 und 312 verdeckt. Der Bandförderer 10 und die Umsetzvorrichtung 310 werden von einem Gesamtgestell 315 gestützt, welches auf Fußelementen 316 auf einem Boden steht. Eine Transporteinheit 20 wird in Betrachtungsrichtung gesehen vor dem Bandförderer 10 und in Zuführrichtung 15 in die Umsetzvorrichtung 310 geführt. Eine zweite Fördervorrichtung, die die Transporteinheit 20 fördert, ist in Figur 3 nicht gezeigt.

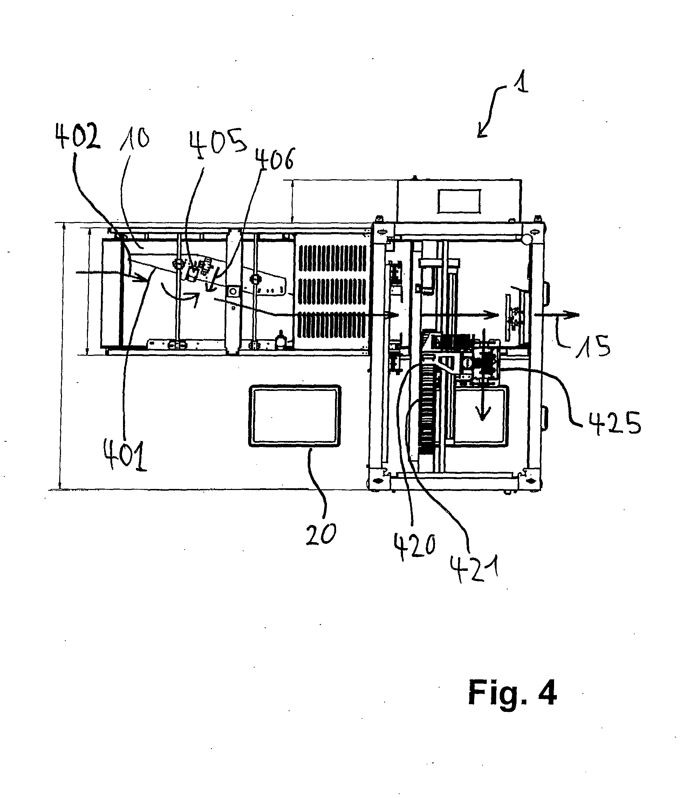

Figur 4 zeigt das in Figur 3 gezeigte zweite Ausführungsbeispiel einer Handhabevorrichtung 1 in einer Ansicht von oben. Eine nicht gezeigte Verpackungseinheit kann dabei über den Rollenförderer 10 in Zuführrichtung 15 gegen eine schräge Anschlagfläche 401 geführt werden, so dass die Verpackungseinheit in einer neuen Förderrichtung 402 geführt wird. Ein Anschlagelement 405 kann in Ausfahrrichtung 406 derart in den Förderweg der Verpackungseinheit gefahren werden, dass die Verpackungseinheit um eine vertikale Achse gedreht wird. Die gedrehte Verpackungseinheit wird dann weiter in Zuführrichtung 15 zur Umsetzvorrichtung gefördert. Figur 4 zeigt zudem einen Linearantrieb 420, welcher als Positionier-Einrichtung 421 vorgesehen ist. Ein Greifer 425 wird dabei mittels des Linearantriebs 420 in einer Ebene bewegt, die im Wesentlichen orthogonal zur Zuführrichtung 15 ausgerichtet ist.

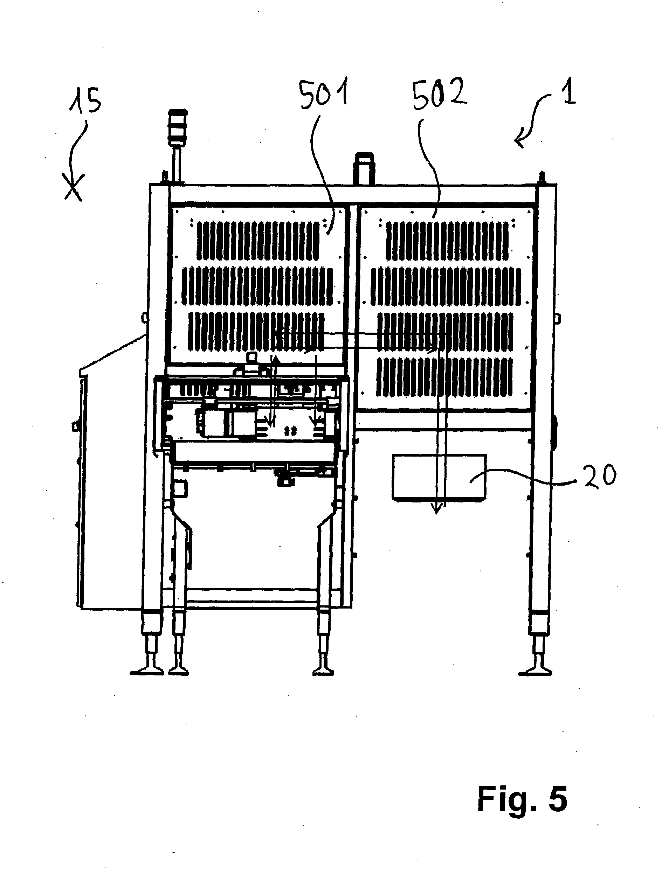

Figur 5 zeigt das in den Figuren 3 und 4 gezeigte zweite Ausführungsbeispiel einer Handhabevorrichtung 1 in einer Betrachtungsrichtung, die der Zuführrichtung 15 entspricht. Dabei ist die Umsetzvorrichtung 310 in Betrachtungsrichtung gesehen von den Blenden 501 und 502 verdeckt. Auch in Figur 5 ist keine zweite Fördervorrichtung gezeigt, welche die Transporteinheit 20 fördert.

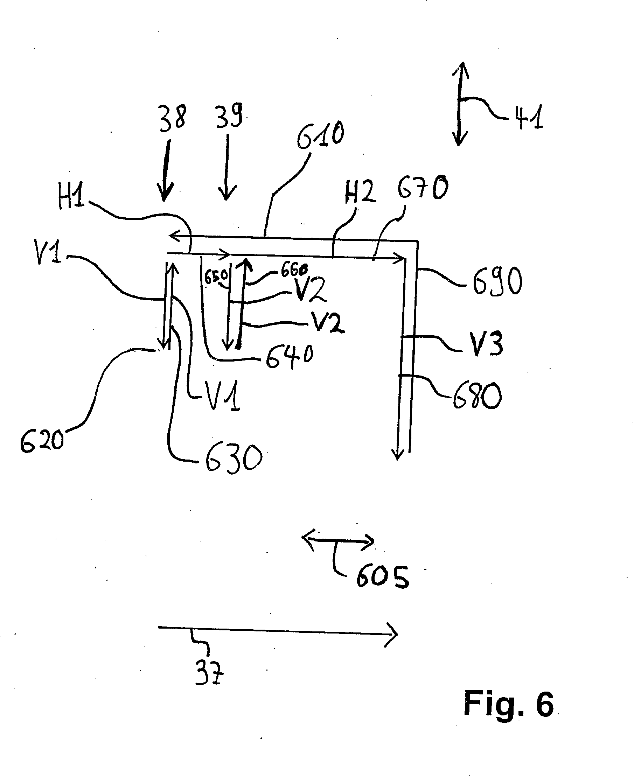

Figur 6 zeigt schematisch die Wege des Greifers 17 beim Anheben, Versetzen und Absetzen der ersten 26 und zweiten Gruppe 36 von Verpackungseinheiten 2 in einer Betrachtungsrichtung wie in Figur 5. Dabei wird in einem ersten Verfahrensschritt 610 der erste Greifabschnitt 30 des Greifers 17 in eine erste Position 38 positioniert, wie in den Figuren 1 und 2 gezeigt. In der ersten Position 38 befindet sich der erste Greifabschnitt 30 im Wesentlichen vertikal über der ersten Gruppe 26 von Verpackungseinheiten 2.

In einem weiteren Verfahrensschritt 620 wird die erste Gruppe 26 mittels des ersten Greifabschnitts 30 gegriffen. Der Greifer 17 muss dazu im Wesentlichen vertikal nach unten über einen Weg V1 bewegt werden. In einem weiteren Verfahrensschritt 630 wird die erste Gruppe 26 von Verpackungseinheiten 2 nach oben angehoben. Dabei wird der Greifer 17 über den Weg V1 in einer im Wesentlichen vertikalen Richtung 41 nach oben bewegt.

Ein Versetzen der ersten Gruppe 26 in einer im Wesentlichen horizontalen Richtung 605 über einen Weg H1 in eine Zwischenposition 39, in der sich der zweite Greifabschnitt 40 über der ersten Fördervorrichtung 11 befindet, erfolgt in einem Verfahrensschritt 640. Vor, während und/oder nach dem Versetzen wird die zweite Gruppe 36 von Verpackungseinheiten 2 zwischenzeitlich auf der Anordnungsfläche 27 angeordnet.

In einem weiteren Verfahrensschritt 650 wird die zweite Gruppe 36 von Verpackungseinheiten 2 mittels des zweiten Greifabschnitts 40 gegriffen, wobei der Greifer 17 dazu im Wesentlichen vertikal nach unten über einen Weg V2 bewegt werden muss. In einem Verfahrensschritt 660 wird die zweite Gruppe von Verpackungseinheiten 2 in einer im Wesentlichen vertikalen Richtung 41 angehoben, wobei der Greifer dazu über einen Weg V2 bewegt wird, welcher etwa die gleiche Länge wie der Weg V1 aufweist. Ein Versetzen der ersten und zweiten Gruppe in einer im Wesentlichen horizontalen Richtung über einen Weg H2 erfolgt in einem weiteren Verfahrensschritt 670. Der Weg H2 weist dabei in der Regel eine Länge auf, die größer als die Länge des Wegs H1 ist.

In einem Verfahrensschritt 680 werden die erste 26 und zweite Gruppe 36 in eine Transporteinheit abgesetzt und dazu über einen Weg V3 in einer im Wesentlichen vertikalen Richtung 41 nach unten bewegt. Zum Abschließen des Absetzschrittes wird der Greifer 17 in einem Verfahrensschritt 690 in einer vertikalen Richtung 41 nach oben (entgegengesetzt zum Weg V3) bewegt. Für einen folgenden Handhabevorgang wird der Greifer 17 dann in einer Richtung entgegengesetzt zur Versetzrichtung 37 (d.h. entgegengesetzt zu dem Weg H1 + H2) in die erste Position 38 bewegt. Dies entspricht einem neuen Positionierschritt entsprechend dem oben genannten Verfahrensschritt 610.

Die in Figur 6 gezeigten Wege sind insbesondere **dadurch gekennzeichnet, dass** der Greifer 17 beim Versetzen der ersten 26 und zweiten Gruppe 36 eine Bewegungsrichtung entlang der Versetzrichtung 37 beibehält. D.h. die Wege H1 und H2 haben die gleiche Richtung und schließen sich in Versetzrichtung 37 aneinander an. Zwischen dem Bewegen des Greifers auf den Wegen H1 und H2 bewegt sich der Greifer 17 nicht in einer Richtung entgegengesetzt zur Versetzrichtung 37.

Durch die in Figur 6 gezeigten Wege wird ein besonders effizientes Handhabeverfahren erzielt, bei welchem die Verfahrwege klein gehalten werden und zudem eine geringe Anzahl von Bewegungen erforderlich ist. Dadurch wird ein hoher Materialdurchsatz bei gleichzeitig geringen Bewegungsgeschwindigkeiten und kleinen Beschleunigungen der Verpackungseinheiten erzielt. Von Vorteil ist ferner die Begrenzung des Bewegungsablaufs auf Bewegungen innerhalb einer zur Zuführrichtung orthogonalen Ebene, so dass horizontale Beschleunigungen der Verpackungseinheiten und der darin befindlichen Güter nur in höchstens einer Richtung auftreten. Durch die Trennung von horizontalen und vertikalen Bewegungsschritten sind unterschiedliche, und damit auf in den Verpackungseinheiten befindliche Güter abstimmbare, Geschwindigkeiten und Beschleunigungen für die vertikalen und horizontalen Bewegungen realisierbar.

## Patentansprüche

1. Handhabeverfahren für Verpackungseinheiten mit den Schritten:
- Fördern von Verpackungseinheiten (2) entlang einer Zuführrichtung (15) zu einer Umsetzvorrichtung (310) mittels einer ersten Fördervorrichtung (11),
- Fördern von Transporteinheiten (20; 21) parallel zu den Verpackungseinheiten (2) entlang der Zuführrichtung (15) zu der Umsetzvorrichtung (310) mittels einer zweiten Fördervorrichtung,
- Anordnen von einer, zwei oder mehreren Verpackungseinheiten (2) nach einem ersten Setzmuster (25) zu einer ersten Gruppe (26) von Verpackungseinheiten (2) auf einer Anordnungsfläche (27),
- Greifen und Anheben (100) der ersten Gruppe (26) von Verpackungseinheiten (2) mittels eines ersten Greifabschnitts (30) eines Greifers (17) der Umsetzvorrichtung (310),
- Versetzen der ersten Gruppe (26) von Verpackungseinheiten (2) entlang einer Versetzrichtung (37) von einer ersten Position (38) über der ersten Fördervorrichtung (11) zu einer zweiten Position (45) über der zweiten Fördervorrichtung und
- Absetzen der ersten Gruppe (26) von Verpackungseinheiten (2) in eine Transporteinheit (20; 21), wobei das Anheben, Versetzen und Absetzen entlang einer Bewegungsbahn erfolgt, die in einer zu der Zuführrichtung (15) orthogonalen Ebene liegt.

2. Handhabeverfahren nach dem vorhergehenden Anspruch, **gekennzeichnet durch** die Schritte:
- Anordnen (110) von einer, zwei oder mehreren Verpackungseinheiten (2) nach einem zweiten Setzmuster (35) zu einer zweiten Gruppe (36) von Verpackungseinheiten (2) auf der Anordnungsfläche (27),
- Greifen (120) und Anheben (130) der zweiten Gruppe (36) von Verpackungseinheiten (2) mittels eines zweiten Greifabschnitts (40) des Greifers (17) der Umsetzvorrichtung (310) und
- Versetzen (140) der zweiten Gruppe (36) von Verpackungseinheiten (2) entlang der Versetzrichtung (37) von einer Zwischenposition (39) über der ersten Fördervorrichtung (11) zu einer zweiten Position (45) über der zweiten Fördervorrichtung,
- wobei beim Absetzen der ersten Gruppe (26) von Verpackungseinheiten (2) in eine Transporteinheit (20; 21) gleichzeitig auch die zweite Gruppe (36) von Verpackungseinheiten (2) in die gleiche Transporteinheit (20; 21) abgesetzt wird.

3. Handhabeverfahren nach einem der vorhergehenden Ansprüche, **dadurch gekennzeichnet, dass** das Anheben in einer im Betriebszustand im Wesentlichen vertikalen Richtung (41) erfolgt, vorzugsweise in einer im Betriebszustand im Wesentlichen nach oben gerichteten Richtung.

4. Handhabeverfahren nach einem der vorhergehenden Ansprüche, **dadurch gekennzeichnet, dass** das Absetzen in einer im Betriebszustand im Wesentlichen vertikalen Richtung (41) erfolgt, vorzugsweise in einer im Betriebszustand im Wesentlichen nach unten gerichteten Richtung.

5. Handhabeverfahren nach einem der vorhergehenden Ansprüche, **dadurch gekennzeichnet, dass** das Versetzen in einer im Betriebszustand im Wesentlichen horizontalen Richtung (37) erfolgt.

6. Handhabeverfahren nach einem der vorhergehenden Ansprüche, **dadurch gekennzeichnet, dass** der Greifer (17) beim Versetzen der ersten und zweiten Gruppe (26 und 36) eine Bewegungsrichtung entlang der Versetzrichtung (37) beibehält.

7. Handhabeverfahren nach einem der vorhergehenden Ansprüche, **gekennzeichnet durch** den Schritt,
- Ausrichten von Verpackungseinheiten (2) mittels einer Ausrichteeinheit (51) zur Erzielung des ersten bzw. zweiten Setzmusters (25 bzw. 35).

8. Handhabeverfahren nach einem der vorhergehenden Ansprüche, **dadurch gekennzeichnet, dass** das Anheben, Versetzen und Absetzen der ersten und zweiten Gruppe (26 und 36) von Verpackungseinheiten wie folgt abläuft:
- Positionieren (610) des ersten Greifabschnitts (30) des Greifers (17) in der ersten Position (38),
- Greifen (620) der ersten Gruppe (26) mittels des ersten Greifabschnitts (30) des Greifers (17),
- Anheben (630) der ersten Gruppe (26) von Verpackungseinheiten (2) in einer im Wesentlichen vertikalen Richtung (41),
- Versetzen (640) der ersten Gruppe (26) in einer im Wesentlichen horizontalen Richtung (37) in eine Zwischenposition (39), in der sich der zweite Greifabschnitt (40) des Greifers (17) über der ersten Fördervorrichtung (11) befindet,
- Greifen (120; 650) der zweiten Gruppe (36) mittels des zweiten Greifabschnitts (40) des Greifers (17),
- Anheben (130; 660) der mittels des zweiten Greifabschnitts (40) des Greifers (17) gegriffenen zweiten Gruppe (36) von Verpackungseinheiten (2) in einer im Wesentlichen vertikalen Richtung (41),
- Versetzen (140; 670) der ersten und zweiten Gruppe (26 und 36) in einer im Wesentlichen horizontalen Richtung (37) in die zweite Position (45), in der sich der Greifer (17) über der zweiten Fördervorrichtung befindet und
- Absetzen (150; 680) der ersten und zweiten Gruppe (26 und 36) in eine Transporteinheit (21) in einer im Wesentlichen vertikalen Richtung (41).

9. Handhabevorrichtung zur Durchführung eines Handhabeverfahrens für Verpackungseinheiten umfassend
- eine erste Fördervorrichtung (11) zum Fördern von Verpackungseinheiten (2) entlang einer Zuführrichtung (15) zu einer Umsetzvorrichtung (310) mit einem Greifer (17) mit einem ersten Greifabschnitt (30),
- eine zweite, parallel zu der ersten angeordnete Fördervorrichtung zum Fördern von Transporteinheiten (20; 21) parallel zu den Verpackungseinheiten (2) entlang der Zuführrichtung (15) zu der Umsetzvorrichtung (310),
- wobei die erste Fördervorrichtung (11) ausgebildet ist, eine, zwei oder mehrere Verpackungseinheiten (2) nach einem vorbestimmten Setzmuster (25) zu einer ersten Gruppe (26) von Verpackungseinheiten (2) auf einer Anordnungsfläche (27) anzuordnen, und
- wobei der Greifer (17) der Umsetzvorrichtung (310) angeordnet und ausgebildet ist, eine Bewegungsbahn zu vollziehen, die in einer zu der Zuführrichtung (15) orthogonalen Ebene liegt und entlang welcher die erste Gruppe (26) von Verpackungseinheiten (2) mittels des ersten Greifabschnitts (30) des Greifers (17) gegriffen und angehoben, entlang einer Versetzrichtung (37) von einer ersten Position (38) über der ersten Fördervorrichtung (11) zu einer zweiten Position (45) über der zweiten Fördervorrichtung versetzt und in eine Transporteinheit (21) abgesetzt wird.

10. Handhabevorrichtung nach einem der vorhergehenden Ansprüche,
**dadurch gekennzeichnet, dass** der Greifer (17) einen ersten und zweiten Greifabschnitt (30 und 40) umfasst, die benachbart zueinander angeordnet sind.

11. Handhabevorrichtung nach einem der vorhergehenden Ansprüche, **dadurch gekennzeichnet, dass** der erste und zweite Greifabschnitt (30 und 40) des Greifers (17) in einer gemeinsamen, vorzugsweise im Betriebszustand der Umsetzvorrichtung (310) im Wesentlichen horizontalen, Ebene angeordnet sind.

12. Handhabevorrichtung nach einem der vorhergehenden Ansprüche, **dadurch gekennzeichnet, dass** der erste und zweite Greifabschnitt (30 und 40) des Greifers (17) derart angeordnet sind, dass der erste Greifabschnitt (30) auf einem der ersten Fördervorrichtung (11) zugewandten Teil des Greifers (17) und der zweite Greifabschnitt (40) auf einem der zweiten Fördervorrichtung zugewandten Teil des Greifers (17) angeordnet ist.

13. Handhabevorrichtung nach einem der vorhergehenden Ansprüche,
**gekennzeichnet durch** eine Ausrichteeinheit (51), die ausgebildet ist, Verpackungseinheiten zur Erzielung des ersten (25) bzw. zweiten Setzmusters (35) auszurichten.

14. Handhabevorrichtung nach dem vorhergehenden Anspruch,
bei welcher die Ausrichteeinheit (51) ein Anschlagelement (52; 405) umfasst, welches derart angeordnet und ausgebildet ist, dass eine mittels der ersten Fördervorrichtung (11) geförderte Verpackungseinheit (2) um eine Achse gedreht wird, die orthogonal zur Zuführrichtung (15), vorzugsweise vertikal (407), ausgerichtet ist.

15. Handhabevorrichtung nach einem der vorhergehenden Ansprüche,
**dadurch gekennzeichnet, dass** der erste (30) und/oder zweite Greifabschnitt (40) mindestens einen Sauggreifer (200) umfasst, der ausgebildet ist, eine Oberfläche (201) einer Verpackungseinheit (2) mittels Ansaugen zu greifen und/oder zu halten.
